# EUROPÄISCHE PATENTSCHRIFT

(11) **EP 3 424 802 B1**
(45) Veröffentlichungstag und Bekanntmachung des Hinweises auf die Patenterteilung: **31.01.2024**
(21) Anmeldenummer: 18176553.8
(22) Anmeldetag: 07.06.2018
(51) Int. Cl.: B62D 21/12, B62D 21/18, B62D 27/02, B62D 27/06, B62D 63/02

(54) **REISEMOBIL**
CAMPER VAN
AUTOCARAVANE

(30) Priorität: 03.07.2017 DE 102017114815
(43) Veröffentlichungstag der Anmeldung: 09.01.2019
(73) Patentinhaber: Hymer GmbH & Co. KG, 88339 Bad Waldsee (DE)
(72) Erfinder: Buschle, Thomas, 88410 Bad Wurzach (DE)
(74) Vertreter: Waller, Stefan

(56) Entgegenhaltungen:
- EP-A1- 2 334 539
- EP-A1- 2 738 068
- WO-A1-00/37301
- WO-A1-2016/134281
- CH-A5- 686 945
- DE-A1- 2 930 036
- DE-U1-202005 009 101

## Beschreibung

Die Erfindung betrifft ein Reisemobil oder dergleichen Freizeitfahrzeug nach Anspruch 1 sowie ein Verfahren zur Verbindung eines Zugkopfes mit einem Anbauchassis nach Anspruch 7.

Aus dem Stand der Technik sind bereits zahlreiche Ausführungsformen von Reisemobilen bekannt. Hierzu ist u.a. auch der Nachteil bekannt, dass die Fertigung solcher Reisemobile mit geringer Flexibilität möglich ist, da die Komponenten Zugkopf und Anbauchassis einerseits bereits fertig montiert beziehbar sind und von diesem ausgehend ein Wohnaufbau erfolgen muss.

Andererseits ist es beispielsweise bei als so genannten Sandwich-Konstruktionen ausgestalteten Anbauchassis bzw. Längsträgern des Anbauchassis nicht möglich, diese zu einem gewünschten bzw. definierten Fertigungsgrad vorzumontieren und das vorgefertigte Anbauchassis sodann mit dem Zugkopf bzw. mit entsprechenden Kopfträgern zu verbinden. Dies begründet sich z.B. darin, dass das Anbauchassis bzw. die Längsträger des Anbauchassis zumindest kurzzeitig entsprechend unter entsprechender Spannung aufgeweitet werden müssten, um diese sodann mit Kopfträgern verbinden zu können.

Aufgrund mangelnder Stabilität beispielsweise bei Sandwich-Konstruktionen sind derartige Aufweitungen von Längsträgern des Anbauchassis jedoch zumindest spannungsfrei bzw. zerstörungsfrei nicht durchführbar.

Dokument EP 2 334 539 A1 offenbart die Merkmale des Oberbegriffs des Anspruchs 1.

Aufgabe der Erfindung ist es, die genannten Nachteile zu beseitigen und ein Reisemobil bereitzustellen, welches eine stabile Verbindung der Kopfträger des Zugkopfes mit Längsträgern des Anbauchassis aufweist, wobei diese Verbindung besonders einfach bereitgestellt werden kann. Es ist weiterhin Aufgabe der Erfindung, ein Verfahren zur Verbindung eines Zugkopfes mit einem Anbauchassis bereitzustellen, wobei auch sichergestellt werden kann, dass das Anbauchassis zu einem gewünschten bzw. definierten Grad vorgefertigt werden kann und erst im Anschluss mit dem Zugkopf verbunden werden kann.

Zur Lösung der Aufgabe wird ein Reisemobil oder dergleichen Freizeitfahrzeug mit den Merkmalen des Anspruchs 1 bzw. ein Verfahren nach Anspruch 7 vorgeschlagen.

Erfindungsgemäß ist nach dem Kennzeichen des Anspruchs 1 vorgesehen, dass das Haltemittel Ausnehmungen umfasst, welche in Ausnehmungen a) am ersten Kopfträger des Zugkopfes und am ersten Längsträger des Anbauchassis oder b) am zweiten Kopfträger des Zugkopfes und am zweiten Längsträger des Anbauchassis formschlüssig eingreifbar sind.

Das plattenförmige Haltemittel ermöglicht, dass Längsträger des Anbauchassis und Längsträger des Zugkopfes mittels Befestigungsmitteln stabil und besonders einfach verbunden werden können. Weiterhin wird ermöglicht, dass Kopfträger und Längsträger einfach und insbesondere ohne Aufweitung der Längsträger, d.h. zerstörungsfrei miteinander verbunden werden können. Somit kann ermöglicht werden, dass das Anbauchassis zu einem gewünschten bzw. definierten Grad vorgefertigt wird und erst im Anschluss daran mit dem Zugkopf bzw. mit Kopfträgern verbunden wird. Dies kann auch so aufgefasst werden, dass Zugkopf und Anbauchassis spannungsfrei miteinander verbindbar sind bzw. verbunden werden.

In einer besonders vorteilhaften Ausgestaltung der Erfindung kann vorgesehen sein, dass das Haltemittel und das Befestigungsmittel einstückig ausgebildet sind. Dadurch kann der Montageaufwand bei der Verbindung von Anbauchassis mit Zugkopfes weiter verringert werden.

In einer weiteren besonders vorteilhaften Ausgestaltung der Erfindung kann vorgesehen sein, dass das Haltemittel Ausnehmungen umfasst, welche in Ausnehmungen am ersten Kopfträger des Zugkopfes und/oder am zweiten Kopfträger des Zugkopfes und/oder am ersten Längsträger des Anbauchassis und/oder am zweiten Längsträger des Anbauchassis formschlüssig eingreifbar sind. Derartige Ausnehmungen können einerseits durch deren Anordnung bzw. Orientierungen den Montageaufwand vereinfachen und andererseits die Stabilität der Verbindung von Zugkopf und Anbauchassis erhöhen.

Um Stabilitäten der Verbindungen von Längsträger und Kopfträger weiter zu erhöhen, kann in einer besonders bevorzugten Weiterbildung der Erfindung vorgesehen sein, dass das Haltemittel Schernocken umfasst.

Um zumindest eine ausreichende Befestigung von Kopfträger und Längsträger zu ermöglichen, kann die Erfindung in einer vorteilhaften Ausgestaltung vorsehen, dass das Haltemittel mittels Schraubverbindungen und/oder Nietverbindungen mit dem ersten Längsträger des Anbauchassis und/oder mit dem zweiten Längsträger des Anbauchassis und/oder mit dem ersten Kopfträger des Zugkopfes und/oder mit dem zweiten Kopfträger des Zugkopfes verbindbar ist. Lösbare Schraubverbindungen können einen etwaigen Reparaturaufwand senken. Nietverbindungen hingegen können eine dauerhafte und insbesondere auch eine erhöhte Stabilität der Verbindung von Zugkopf und Anbauchassis ermöglichen.

Eine vorteilhafte Weiterentwicklung der Erfindung kann vorsehen, dass das Haltemittel und die Kopfträger des Zugkopfes jeweils Ausnehmungen umfassen, wobei die Ausnehmungen des Haltemittels und die Ausnehmungen der Kopfträger des Zugkopfes gleiche Tiefen aufweisen. Hierdurch können abgleitende Bewegungen von Haltemittel und Kopfträger vermieden werden. Zudem berühren sich die Grundflächen der Ausnehmungen auf diese Weise nicht, da durch die Materialstärke des Längsträgers ein Abstand gegeben ist. Die Positionierung und Arretierung erfolgt insbesondere über die Kegelflächen in den Ausnehmungen. Somit kann die Verbindung von Haltemittel und Kopfträger bzw. von Längsträger und Kopfträger weiter stabilisiert werden.

Die Erfindung betrifft auch ein Verfahren mit den Merkmalen des Anspruchs 7.

Um die Stabilität der Verbindung von Anbauchassis und Zugkopf zu erhöhen, kann in einer Weiterbildung der Erfindung vorgesehen sein, dass die Längsträger des Anbauchassis auf die Kopfträger des Zugkopfes aufgeschoben werden und befestigt, insbesondere verriegelt werden oder dass die Kopfträger des Zugkopfes auf die Längsträger des Anbauchassis aufgeschoben und befestigt, insbesondere verriegelt werden.

In einer besonders vorteilhaften Weiterbildung der Erfindung kann auch vorgesehen sein, dass das Aufschieben spannungsfrei erfolgt.

Ein spannungsfreies Aufschieben ist im Sinne der Erfindung insbesondere so aufzufassen, dass Längsträger des Anbauchassis nicht aufgeweitet werden, um mit Kopfträgern verbunden zu werden. Dies kann ermöglichen, dass auch Anbauchassis mit geringerer Stabilität, z.B. Sandwich-Konstruktionen, stabil und überdies zerstörungsfrei mit Zugköpfen verbunden werden können bzw. verbindbar sind.

Eine weitere vorteilhafte Weiterbildung der Erfindung kann vorsehen, dass das Anbauchassis als Sandwich-Konstruktion ausgebildet wird, welches wenigstens einen Doppelboden umfasst. Derartige Sandwich-Konstruktionen ermöglichen Gewichtseinsparungen sowie erhöhte Stauraumnutzungen.

Um ein Anbauchassis mit erhöhter Stabilität und Tragkraft bereitstellen zu können, kann in einer weiteren vorteilhaften Weiterbildung der Erfindung vorsehen sein, dass das Anbauchassis ein Stahlgerippe umfasst.

Nachfolgend wird die Erfindung anhand von Zeichnungen näher erläutert. Hierbei zeigt:
- Fig. 1:: eine stark vereinfachte schematische Darstellung eines erfindungsgemäßen Reisemobils;
- Fig. 2:: einen Ausschnitt aus dem in Fig. 1 gezeigten Reisemobils in einer Explosionsdarstellung.

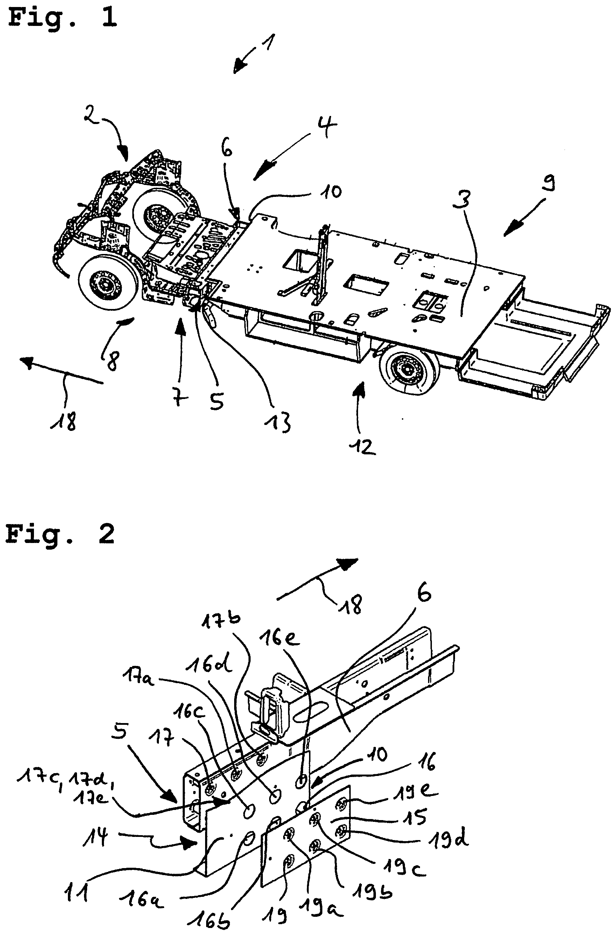

In der Fig. 1 ist ein Reisemobil schematisch 1 dargestellt. Aus Gründen vereinfachter Darstellung sind hierbei weitere Details zu einem Wohnaufbau bzw. zu einer Fahrerkabine nicht näher gezeigt.

Das Reisemobil 1 umfasst einen motorisierten Zugkopf 2 und ein Anbauchassis 3. Der Zugkopf 2 umfasst in Vorwärts- bzw. Fahrtrichtung 18 betrachtet an einer rechten Seite 4 eines hinteren Endes 5 einen ersten Kopfträger 6 und an einer linken Seite 7 eines hinteren Endes 5 einen zweiten Kopfträger 8. Das Anbauchassis 3 umfasst an einer rechten Seite 9 eines vorderen Endes 10 einen ersten Längsträger 11 und an einer linken Seite 12 eines vorderen Endes 10 einen zweiten Längsträger 13.

Es ist aus der Fig. 2 ersichtlich, dass der erste Längsträger 11 des Anbauchassis mit dem ersten Kopfträger 6 des Zugkopfes mittels einer formschlüssigen Verbindung 14 verbindbar ist.

Ohne weitere Darstellung sieht die Erfindung in Analogie hierzu auch vor, dass der zweite Längsträger des Anbauchassis mit dem zweiten Kopfträger des Zugkopfes mittels einer formschlüssigen Verbindung verbindbar ist.

Im Kern sieht die Erfindung wie in der Fig. 2 gezeigt vor, dass die Verbindung 14 ein plattenförmiges Haltemittel 15 umfasst, wobei das Haltemittel 15 formschlüssig mit dem ersten Längsträger 11 des Anbauchassis und mit dem ersten Kopfträger 6 verbindbar und mittels Befestigungsmitteln (nicht gezeigt) fixierbar ist. Zur Herstellung dieser formschlüssigen Verbindung umfasst das Haltemittel 15 Ausnehmungen 19 bis 19e, welche formschlüssig mit Ausnehmungen 16 bis 16e am Längsträger 11 bzw. mit Ausnehmungen 17 bis 17e (17c, 17d, 17e sind hierbei verdeckt vom Längsträger 11) zusammenwirken.

Das Haltemittel 15 ermöglicht, dass ein Reisemobil (siehe Fig. 1) bereitgestellt werden kann, bei welchem Längsträger des Anbauchassis spannungsfrei mit Kopfträgern des Zugkopfes verbunden werden können.

### Bezugszeichenliste:

- 1: Reisemobil oder dergleichen Freizeitfahrzeug
- 2: Zugkopf
- 3: Anbauchassis
- 4: rechte Seite
- 5: hinteres Ende (des Zugkopfes)
- 6: erster Kopfträger
- 7: linke Seite
- 8: zweiter Kopfträger
- 9: rechte Seite
- 10: vorderes Ende (des Anbauchassis)
- 11: erster Längsträger
- 12: linke Seite
- 13: zweiter Längsträger
- 14: Verbindung
- 15: Haltemittel
- 16: Ausnehmung (am vorderen Ende 10)
- 16a: Ausnehmung (am vorderen Ende 10)
- 16b: Ausnehmung (am vorderen Ende 10)
- 16c: Ausnehmung (am vorderen Ende 10)
- 16d: Ausnehmung (am vorderen Ende 10)
- 16e: Ausnehmung (am vorderen Ende 10)
- 17: Ausnehmung (des ersten Kopfträgers)
- 17a: Ausnehmung (des ersten Kopfträgers)
- 17b: Ausnehmung (des ersten Kopfträgers)
- 17c: Ausnehmung (des ersten Kopfträgers)
- 17d: Ausnehmung (des ersten Kopfträgers)
- 17e: Ausnehmung (des ersten Kopfträgers)
- 18: Vorwärts- bzw. Fahrtrichtung
- 19: Ausnehmung (des Haltemittels)
- 19a: Ausnehmung (des Haltemittels)
- 19b: Ausnehmung (des Haltemittels)
- 19c: Ausnehmung (des Haltemittels)
- 19d: Ausnehmung (des Haltemittels)
- 19e: Ausnehmung (des Haltemittels)

## Patentansprüche

1. Reisemobil oder dergleichen Freizeitfahrzeug (1), umfassend einen motorisierten Zugkopf (2) und ein Anbauchassis (3),
- wobei der Zugkopf (2) in Vorwärts- bzw. Fahrtrichtung (18) betrachtet an einer rechten Seite (4) eines hinteren Endes (5) einen ersten Kopfträger (6) und an einer linken Seite (7) eines hinteren Endes (5) einen zweiten Kopfträger (8) umfasst und
- wobei das Anbauchassis (3) an einer rechten Seite (9) eines vorderen Endes (10) einen ersten Längsträger (11) und an einer linken Seite (12) eines vorderen Endes (10) einen zweiten Längsträger (13) umfasst,
- wobei der erste Längsträger (11) des Anbauchassis (3) mit dem ersten Kopfträger (6) des Zugkopfes (2) mittels wenigstens einer formschlüssigen Verbindung (14) verbindbar ist,
- wobei der zweite Längsträger (13) des Anbauchassis (3) mit dem zweiten Kopfträger (8) des Zugkopfes (2) mittels wenigstens einer formschlüssigen Verbindung (14) verbindbar ist und
- wobei die wenigstens eine Verbindung (14) zumindest ein plattenförmiges Haltemittel (15) umfasst,
wobei das Haltemittel (15) formschlüssig
a) mit dem ersten Längsträger (11) des Anbauchassis (3) und mit dem ersten Kopfträger (6) des Zugkopfes (2) oder
b) mit dem zweiten Längsträger (13) des Anbauchassis (3) und mit dem zweiten Kopfträger (8) des Zugkopfes (2) verbindbar und
mittels Befestigungsmitteln fixierbar ist, **dadurch gekennzeichnet, dass** das Haltemittel (15) Ausnehmungen (19, 19a, 19b, 19c, 19d, 19e) umfasst, welche in Ausnehmungen (16, 16a, 16b, 16c; 16d, 16e; 17, 17a, 17b, 17c, 17d, 17e)
a) am ersten Kopfträger (6) des Zugkopfes (2) und am ersten Längsträger (11) des Anbauchassis (3) oder
b) am zweiten Kopfträger (8) des Zugkopfes (2) und am zweiten Längsträger (13) des Anbauchassis (3)
formschlüssig eingreifbar sind.

2. Reisemobil nach Anspruch 1, **dadurch gekennzeichnet, dass** das Haltemittel (15) und das Befestigungsmittel einstückig ausgebildet sind.

3. Reisemobil nach einem der vorangehenden Ansprüche, **dadurch gekennzeichnet, dass** das plattenförmige Haltemittel (15) ermöglicht, dass
a) der erste Kopfträger (6) und der erste Längsträger (11) oder
b) der zweite Kopfträger (8) und der zweite Längsträger (13)
ohne Aufweitung der Längsträger (11, 13) miteinander verbunden sind.

4. Reisemobil nach einem der vorangehenden Ansprüche, **dadurch gekennzeichnet, dass** das Haltemittel (15) Schernocken umfasst.

5. Reisemobil nach einem der vorangehenden Ansprüche, **dadurch gekennzeichnet, dass** das Haltemittel (15) mittels Schraubverbindungen und/oder Nietverbindungen mit dem ersten Längsträger (11) des Anbauchassis (3) und/oder mit dem zweiten Längsträger (13) des Anbauchassis (3) und/oder mit dem ersten Kopfträger (6) des Zugkopfes (2) und/oder mit dem zweiten Kopfträger (8) des Zugkopfes (2) verbindbar ist.

6. Reisemobil nach einem der vorangehenden Ansprüche, **dadurch gekennzeichnet, dass** das Haltemittel (15) und die Kopfträger (6, 8) des Zugkopfes (2) jeweils Ausnehmungen umfassen, wobei die Ausnehmungen (19, 19a, 19b, 19c, 19d, 19e) des Haltemittels (15) und die Ausnehmungen (17, 17a, 17b, 17c, 17d, 17e) der Kopfträger (6, 8) des Zugkopfes (2) gleiche Tiefen aufweisen.

7. Verfahren zur Verbindung eines Zugkopfes (2) mit einem Anbauchassis (3), insbesondere Fertigung eines Reisemobils oder dergleichen Freizeitfahrzeugs, **gekennzeichnet durch** folgende Schritte:
1) Bereitstellen eines Anbauchassis (3), wobei das Anbauchassis (3) an einer rechten Seite (9) eines vorderen Endes (10) einen ersten Längsträger (11) und an einer linken Seite (12) eines vorderen Endes (10) einen zweiten Längsträger (13) umfasst und Bereitstellen eines Zugkopfes (2), wobei der Zugkopf (2) an einer rechten Seite (4) eines hinteren Endes (5) einen ersten Kopfträger (6) und an einer linken Seite (7) eines hinteren Endes (5) einen zweiten Kopfträger (8) umfasst;
2) Verbinden der Längsträger (11, 13) des Anbauchassis (3) mit den Kopfträgern (6, 8) des Zugkopfes (2) mittels je wenigstens eines plattenförmigen Haltemittels (15) und Befestigungsmitteln, wobei die Haltemittel (15) Ausnehmungen (19, 19a, 19b, 19c, 19d, 19e) umfassen, welche in Ausnehmungen (16, 16a, 16b, 16c; 16d, 16e; 17, 17a, 17b, 17c, 17d, 17e)
a) am ersten Kopfträger (6) des Zugkopfes (2) und am ersten Längsträger (11) des Anbauchassis (3) oder
b) am zweiten Kopfträger (8) des Zugkopfes (2) und am zweiten Längsträger (13) des Anbauchassis (3)
formschlüssig eingreifen.

8. Verfahren nach Anspruch 7, **dadurch gekennzeichnet, dass** die Längsträger (11, 13) des Anbauchassis (3) auf die Kopfträger (6, 8) des Zugkopfes (2) aufgeschoben werden und befestigt, insbesondere verriegelt werden oder dass die Kopfträger (6, 8) des Zugkopfes (2) auf die Längsträger (11, 13) des Anbauchassis (3) aufgeschoben und befestigt, insbesondere verriegelt werden.

9. Verfahren nach Anspruch 8, **dadurch gekennzeichnet, dass** das Aufschieben spannungsfrei erfolgt und/oder dass Kopfträger (6, 8) und Längsträger (11, 13) ohne Aufweitung der Längsträger (11, 13) miteinander verbunden werden.

10. Verfahren nach Anspruch 7, **dadurch gekennzeichnet, dass** das Anbauchassis (3) als Sandwich-Konstruktion ausgebildet wird, welches wenigstens einen Doppelboden umfasst.

11. Verfahren nach Anspruch 7, **dadurch gekennzeichnet, dass** das Anbauchassis (3) ein Stahlgerippe umfasst.

## Claims

1. Motorhome or similar recreational vehicle (1), comprising a motorized tractor head (2) and an attachable chassis (3),
- wherein the tractor head (2), viewed in the forward direction or direction of travel (18), comprises, on a right-hand side (4) of a rear end (5), a first head support (6) and, on a left-hand side (7) of a rear end (5), a second head support (8), and
- wherein the attachable chassis (3) comprises, on a right-hand side (9) of a front end (10), a first longitudinal member (11) and, on a left-hand side (12) of a front end (10), a second longitudinal member (13),
- wherein the first longitudinal member (11) of the attachable chassis (3) is connectable to the first head support (6) of the tractor head (2) by means of at least one form-fit connection (14),
- wherein the second longitudinal member (13) of the attachable chassis (3) is connectable to the second head support (8) of the tractor head (2) by means of at least one form-fit connection (14), and
- wherein the at least one connection (14) comprises at least one plate-shaped holding means (15),
wherein
the holding means (15) is positively connectable
a) to the first longitudinal member (11) of the attachable chassis (3) and to the first head support (6) of the tractor head (2) or
b) to the second longitudinal member (13) of the attachable chassis (3) and to the second head support (8) of the tractor head (2) and
can be fixed by fastening means, **characterized in that** the holding means (15) comprises recesses (19, 19a, 19b, 19c, 19d, 19e) which can engage with a form fit in recesses (16, 16a, 16b, 16c; 16d, 16e; 17, 17a, 17b, 17c, 17d, 17e)
a) on the first head support (6) of the tractor head (2) and on the first longitudinal member (11) of the attachable chassis (3) or
b) on the second head support (8) of the tractor head (2) and on the second longitudinal member (13) of the attachable chassis (3).

2. Motorhome according to Claim 1, **characterized in that** the holding means (15) and the fastening means are integrally formed.

3. Motorhome according to one of the preceding claims, **characterized in that** the plate-shaped holding means (15) permits that
a) the first head support (6) and the first longitudinal member (11) or
b) the second head support (8) and the second longitudinal member (13)
are connected to each other without widening of the longitudinal members (11, 13).

4. Motorhome according to one of the preceding claims, **characterized in that** the holding means (15) comprises shear cams.

5. Motorhome according to one of the preceding claims, **characterized in that** the holding means (15) is connectable, by means of screw connections and/or rivet connections, to the first longitudinal member (11) of the attachable chassis (3) and/or to the second longitudinal member (13) of the attachable chassis (3) and/or to the first head support (6) of the tractor head (2) and/or to the second head support (8) of the tractor head (2).

6. Motorhome according to one of the preceding claims, **characterized in that** the holding means (15) and the head supports (6, 8) of the tractor head (2) each comprise recesses, wherein the recesses (19, 19a, 19b, 19c, 19d, 19e) of the holding means (15) and the recesses (17, 17a, 17b, 17c, 17d, 17e) of the head supports (6, 8) of the tractor head (2) have the same depths.

7. Method for connection of a tractor head (2) to an attachable chassis (3), in particular production of a motorhome or similar recreational vehicle, **characterized by** the following steps:
1) making available an attachable chassis (3), wherein the attachable chassis (3) comprises, on a right-hand side (9) of a front end (10), a first longitudinal member (11) and, on a left-hand side (12) of a front end (10), a second longitudinal member (13), and making available a tractor head (2), wherein the tractor head (2) comprises, on a right-hand side (4) of a rear end (5), a first head support (6) and, on a left-hand side (7) of a rear end (5), a second head support (8);
2) connecting the longitudinal members (11, 13) of the attachable chassis (3) to the head supports (6, 8) of the tractor head (2) by means of in each case at least one plate-shaped holding means (15) and fastening means, wherein the holding means (15) comprise recesses (19, 19a, 19b, 19c, 19d, 19e) which engage with a form fit in recesses (16, 16a, 16b, 16c; 16d, 16e; 17, 17a, 17b, 17c, 17d, 17e)
a) on the first head support (6) of the tractor head (2) and on the first longitudinal member (11) of the attachable chassis (3) or
b) on the second head support (8) of the tractor head (2) and on the second longitudinal member (13) of the attachable chassis (3).

8. Method according to Claim 7, **characterized in that** the longitudinal members (11, 13) of the attachable chassis (3) are pushed onto the head supports (6, 8) of the tractor head (2) and fastened, in particular locked, or **in that** the head supports (6, 8) of the tractor head (2) are pushed onto the longitudinal members (11, 13) of the attachable chassis (3) and fastened, in particular locked.

9. Method according to Claim 8, **characterized in that** the pushing-on takes place free of stress, and/or in that head supports (6, 8) and longitudinal members (11, 13) are connected to one another without widening of the longitudinal members (11, 13).

10. Method according to Claim 7, **characterized in that** the attachable chassis (3) is designed as a sandwich structure, which comprises at least one raised floor.

11. Method according to Claim 7, **characterized in that** the attachable chassis (3) comprises a steel frame.

## Revendications

1. Camping-car (1) ou véhicule de loisirs similaire, comprenant une tête de traction motorisée (2) et un châssis de montage (3),
- la tête de traction (2), vue dans le sens de la marche (18), comprend un premier support de tête (6) sur un côté droit (4) d'une extrémité arrière (5) et un deuxième support de tête (8) sur un côté gauche (7) d'une extrémité arrière (5), et
- le châssis de montage (3) comprend un premier longeron (11) sur un côté droit (9) d'une extrémité avant (10) et un deuxième longeron (13) sur un côté gauche (12) d'une extrémité avant (10),
- le premier longeron (11) du châssis de montage (3) étant apte à être relié au premier support de tête (6) de la tête de traction (2) au moyen d'au moins une liaison par complémentarité de forme (14),
- le deuxième longeron (13) du châssis de montage (3) étant apte à être relié au deuxième support de tête (8) de la tête de traction (2) au moyen d'au moins une liaison par complémentarité de forme (14) et
- l'au moins une liaison (14) comprenant au moins un moyen de retenue (15) en forme de plaque, le moyen de retenue (15) étant apte à être relié par complémentarité de formes
a) au premier longeron (11) du châssis de montage (3) et au premier support de tête (6) de la tête de traction (2) ou
b) au deuxième longeron (13) du châssis de montage (3) et au deuxième support de tête (8) de la tête de traction (2) et
étant apte à être fixé au moyen de moyens de fixation, **caractérisé en ce que**
le moyen de retenue (15) comprend des évidements (19, 19a, 19b, 19c, 19d, 19e) qui sont aptes à être engagés par complémentarité de formes dans des évidements (16, 16a, 16b, 16c ; 16d, 16e ; 17, 17a, 17b, 17c, 17d, 17e) présents
a) sur le premier support de tête (6) de la tête de traction (2) et sur le premier longeron (11) du châssis de montage (3) ou
b) sur le deuxième support de tête (8) de la tête de traction (2) et sur le deuxième longeron (13) du châssis de montage (3) .

2. Camping-car selon la revendication 1, **caractérisé en ce que** le moyen de retenue (15) et le moyen de fixation sont réalisés d'un seul tenant.

3. Camping-car selon l'une des revendications précédentes, **caractérisé en ce que** le moyen de retenue (15) en forme de plaque permet d'assembler entre eux
a) le premier support de tête (6) et le premier longeron (11) ou
b) le deuxième support de tête (8) et le deuxième longeron (13)
sans élargissement des longerons (11, 13).

4. Camping-car selon l'une des revendications précédentes, **caractérisé en ce que** le moyen de retenue (15) comprend des cames de cisaillement.

5. Camping-car selon l'une des revendications précédentes, **caractérisé en ce que** le moyen de retenue (15) est apte à être relié au premier longeron (11) du châssis de montage (3) et/ou au deuxième longeron (13) du châssis de montage (3) et/ou au premier support de tête (6) de la tête de traction (2) et/ou au deuxième support de tête (8) de la tête de traction (2) au moyen de liaisons vissées et/ou de liaisons rivetées.

6. Camping-car selon l'une des revendications précédentes, **caractérisé en ce que** le moyen de retenue (15) et les supports de tête (6, 8) de la tête de traction (2) comprennent chacun des évidements, les évidements (19, 19a, 19b, 19c, 19d, 19e) du moyen de retenue (15) et les évidements (17, 17a, 17b, 17c, 17d, 17e) des supports de tête (6, 8) de la tête de traction (2) ayant des profondeurs identiques.

7. Procédé de liaison d'une tête de traction (2) à un châssis de montage (3), en particulier fabrication d'un camping-car ou d'un véhicule de loisirs similaire, **caractérisé par** les étapes suivantes :
1) fournir un châssis de montage (3), le châssis de montage (3) comprenant un premier longeron (11) sur un côté droit (9) d'une extrémité avant (10) et un deuxième longeron (13) sur un côté gauche (12) d'une extrémité avant (10), et fournir une tête de traction (2), la tête de traction (2) comprenant un premier support de tête (6) sur un côté droit (4) d'une extrémité arrière (5) et un deuxième support de tête (8) sur un côté gauche (7) d'une extrémité arrière (5) ;
2) relier les longerons (11, 13) du châssis de montage (3) aux supports de tête (6, 8) de la tête de traction (2) au moyen respectivement d'au moins un moyen de retenue (15) en forme de plaque et de moyens de fixation, le moyen de retenue (15) comprenant des évidements (19, 19a, 19b, 19c, 19d, 19e) qui sont aptes à être engagés par complémentarité de formes dans des évidements (16, 16a, 16b, 16c ; 16d, 16e ; 17, 17a, 17b, 17c, 17d, 17e) présents
a) sur le premier support de tête (6) de la tête de traction (2) et sur le premier longeron (11) du châssis de montage (3) ou
b) sur le deuxième support de tête (8) de la tête de traction (2) et sur le deuxième longeron (13) du châssis de montage (3) .

8. Procédé selon la revendication 7, **caractérisé en ce que** les longerons (11, 13) du châssis de montage (3) sont enfilés sur les supports de tête (6, 8) de la tête de traction (2) et fixés, notamment verrouillés, ou **en ce que** les supports de tête (6, 8) de la tête de traction (2) sont enfilés sur les longerons (11, 13) du châssis de montage (3) et fixés, notamment verrouillés.

9. Procédé selon la revendication 8, **caractérisé en ce que** l'enfilage s'effectue sans tension et/ou **en ce que** les supports de tête (6, 8) et les longerons (11, 13) sont reliés entre eux sans élargissement des longerons (11, 13).

10. Procédé selon la revendication 7, **caractérisé en ce que** le châssis de montage (3) est réalisé sous la forme d'une construction en sandwich, qui comprend au moins un double plancher.

11. Procédé selon la revendication 7, **caractérisé en ce que** le châssis de montage (3) comprend une ossature en acier.
